# EUROPEAN PATENT SPECIFICATION

(11) **EP 2 497 935 B1**
(45) Date of publication and mention of the grant of the patent: **20.12.2017**
(21) Application number: 09846313.6
(22) Date of filing: 04.11.2009
(51) Int. Cl.: F02D 41/10, F02D 41/00, F02D 41/30, F02M 26/05, F02M 26/10, F02M 35/10

(54) **EGR CONTROL SYSTEM FOR INTERNAL COMBUSTION ENGINE**
EGR-STEUERUNGSSYSTEM FÜR EINEN VERBRENNUNGSMOTOR
SYSTÈME DE COMMANDE D'EGR POUR MOTEUR À COMBUSTION INTERNE

(43) Date of publication of application: 12.09.2012
(73) Proprietor: TOYOTA JIDOSHA KABUSHIKI KAISHA, Toyota-shi, Aichi-ken, 471-8571 (JP)
(72) Inventor: HASHIZUME, Takeshi, Aichi 471-8571 (JP)
(74) Representative: TBK
(86) International application number: PCT/JP2009/068847
(87) International publication number: WO 2011/055435

(56) References cited:
- EP-A2- 1 515 033
- JP-A- 2000 097 075
- JP-A- 2005 090 279
- JP-A- 2005 090 279

## Description

### [TECHNICAL FIELD]

The present invention relates to an EGR control system for an internal combustion engine that selects, as its combustion state, either normal combustion or low temperature combustion in accordance with an operation range.

### [BACKGROUND ART]

Heretofore, there has been known a technology of introducing the exhaust gas of an internal combustion engine into the intake system as EGR gas so as to reduce the amount of NOx emitted from the internal combustion engine. There has also been known a technology of achieving, in a predetermined operation range, low temperature combustion, which refers to a combustion state in which the EGR ratio of the intake air (i.e. the ratio of the amount of EGR gas to the total amount of the intake gas) is made higher than the ratio at which the quantity of smoke generation becomes largest to thereby reduce the quantity of smoke generation.

Patent Document 1 discloses a technology in which during combustion mode switching in an internal combustion engine that selectively switches between normal combustion and low temperature combustion, the rate of change of the opening degree of the EGR valve relative to the difference between the actual EGR ratio and a target EGR ratio is made larger than that during the time of normal EGR ratio control other than the time of combustion mode switching.

Patent Document 2 discloses a technology in which if the temperature of an NOx catalyst is not lower than a predetermined temperature when reducing NOx, the air-fuel ratio of the ambient atmosphere around the NOx catalyst is decreased to a target air-fuel ratio while achieving low temperature combustion in the internal combustion engine.

Patent Document 3 discloses an EGR control system according to the preamble of claim 1.

### [PRIOR ART DOCUMENTS]

### [Patent Documents]

Patent Document 1: Japanese Patent Application Laid-Open No. 2005-090279
Patent Document 2: Japanese Patent Application Laid-Open No. 2009-121289
Patent Document 3: EP 1 515 033 A2

### [DISCLOSURE OF THE INVENTION]

### [Problem to be Solved by the Invention]

An object of the present invention is to provide a technology that enables a reduction of the quantity of smoke generation during transitional operation under low temperature combustion in an internal combustion engine that selects, as its combustion state, either normal combustion or low temperature combustion in accordance with the operation range.

### [Means for Solving the Problem]

According to the present invention, an upper limit value is set for the intake air quantity of an internal combustion engine during low temperature combustion, and the EGR ratio of the intake air is controlled in such a way that the intake air quantity does not exceed the upper limit value even during the transitional operation.

More specifically, an EGR control system for an internal combustion engine is a system for an internal combustion engine that comprises an EGR apparatus that introduces exhaust gas of the internal combustion engine into an intake system as EGR gas and selects, as its combustion state, either low temperature combustion that is achieved by making the EGR ratio of the intake air higher than a ratio at which the quantity of smoke generation becomes largest or normal combustion in accordance with an operation range, and characterized by further comprising:
upper limit air quantity setting means for setting, in accordance with the engine load, an upper limit value of the intake air quantity of the internal combustion engine for keeping the quantity of smoke generation within an allowable range when the combustion state of the internal combustion engine is low temperature combustion, and
EGR ratio control means for controlling the EGR ratio of the intake air by regulating the quantity of EGR gas introduced into the intake system by said EGR apparatus so as to make the intake air quantity of the internal combustion engine equal to or smaller than the upper limit value set by said upper limit air quantity setting means when the combustion state of the internal combustion engine is low temperature combustion and the operation state of the internal combustion engine is transitional operation in which the engine load of the internal combustion engine is increasing or decreasing.

If the intake air quantity increases excessively during low temperature combustion, the quantity of smoke generation increases due to a rise in the combustion temperature. During transitional operation, if the EGR ratio of the intake air is set to be equal to that during normal operation, there is a possibility that the intake air quantity becomes unduly large.

In the present invention, the upper limit air quantity setting means sets an upper limit value of the intake air quantity that keeps the quantity of smoke generation within allowable range during low temperature combustion. In addition, when transitional operation is performed during low temperature combustion, the EGR ratio of the intake air is controlled so as to make the intake air quantity equal to or smaller than the upper limit value. Thus, the intake air quantity is prevented from becoming unduly large during transitional operation under low temperature combustion. Consequently, the quantity of smoke generation during transitional operation under low temperature combustion can be reduced.

The actual intake air pressure can be higher than a target intake air pressure that is set in accordance with, for example, the engine load of the internal combustion engine in some cases, such as where the intake and exhaust system of the internal combustion engine is equipped with a supercharger and there is a supercharge lag during decelerating operation. In such cases, the intake air quantity tends to become unduly large.

In view of this, the EGR control system for an internal combustion engine according to the present invention may further comprise intake air pressure sensing means for measuring the intake air pressure of the internal combustion engine. Then, the above-described control of the EGR ratio of the intake air may be performed by the EGR ratio control means when the combustion state of the internal combustion engine is low temperature combustion and the intake air pressure measured by the intake air pressure sensing means is higher than a target intake air pressure.

In the EGR control system for an internal combustion engine according to the present invention, the air-fuel ratio of the air-fuel mixture may be controlled to be lower than a predetermined air-fuel ratio during low temperature combustion, and the air-fuel ratio of the air-fuel mixture is controlled to be higher than the predetermined air-fuel ratio during normal combustion. Then, if the EGR control system for an internal combustion engine according to the present invention further comprises air-fuel ratio obtaining means for obtaining the air-fuel ratio of the air-fuel mixture in the internal combustion engine, the upper limit value of the intake air quantity of the internal combustion engine may be set by the upper limit air quantity setting means when the air-fuel ratio of the air-fuel mixture obtained by the air-fuel mixture obtaining means is lower than the predetermined air-fuel mixture.

The predetermined air-fuel ratio mentioned here may be a air-fuel ratio at which the quantity of smoke generation becomes largest.

### [Advantageous Effect of the Invention]

With the present invention, the quantity of smoke generation during transitional operation under low temperature combustion can be reduced.

### [BRIEF DESCRIPTION OF THE DRAWINGS]

Fig. 1 is a diagram showing the basic configuration of an internal combustion engine and its intake and exhaust system according to an embodiment.
Fig. 2 is a diagram showing an operation range in which normal combustion is performed and an operation range in which low temperature combustion is performed.
Fig. 3 is a graph showing the relationship between the EGR ratio of the intake air and the quantity of smoke generation.
Fig. 4 is a graph showing the relationship between the intake air quantity and the quantity of smoke generation in a case in which the engine load of the internal combustion engine is a certain engine load during normal combustion.
Fig. 5 is a graph showing the relationship between the intake air quantity and the quantity of smoke generation in a case in which the engine load of the internal combustion engine is a certain engine load during low temperature combustion.
Fig. 6 is a flow chart showing a flow of EGR control according to embodiment 1.
Fig. 7 is a graph showing the relationship between the air-fuel ratio of air-fuel mixture and the quantity of smoke generation.
Fig. 8 is a flow chart showing a flow of EGR control according to embodiment 2.

### [THE MODE FOR CARRYING OUT THE INVENTION]

In the following, a specific embodiment of the present invention will be described with reference to the drawings. The dimensions, materials, shapes and relative arrangements etc. of the components that will be described in connection with the embodiment are not intended to limit the technical scope of the present invention only to them, unless particularly stated.

### <Embodiment 1>

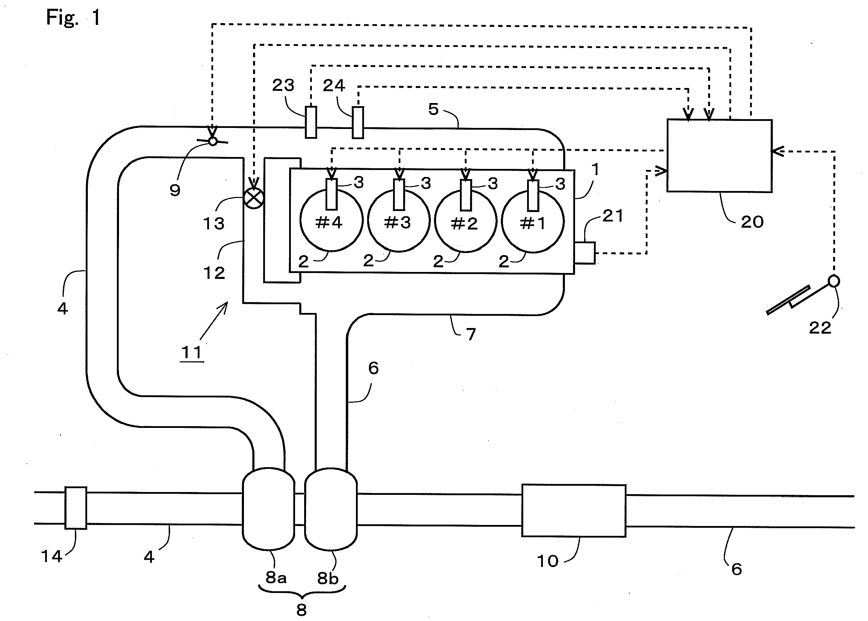

Embodiment 1 of the present invention will be described with reference to Figs. 1 to 6.

### (Basic Configuration of Internal Combustion Engine and Intake and Exhaust System Thereof)

Fig. 1 is a diagram showing the basic configuration of an internal combustion engine according to this embodiment and its intake and exhaust system. The internal combustion engine 1 is a diesel engine having four cylinders 2 for driving a vehicle. Each cylinder 2 is equipped with a fuel injection valve 3 that injects fuel directly into the cylinder 2.

The internal combustion engine 1 is connected with an intake manifold 5 and an exhaust manifold 7. An intake passage 4 is connected to the intake manifold 5. An exhaust passage 6 is connected to the exhaust manifold 7. A compressor 8a of a turbocharger 8 is provided in the intake passage 4. A turbine 8b of the turbocharger 8 is provided in the exhaust passage 6.

An air flow meter 14 is provided in the intake passage 4 upstream of the compressor 8a. A throttle valve 9 is provided in the intake passage 4 downstream of the compressor 8a. An exhaust gas purification apparatus 10 comprising a particulate filter and an NOx storage reduction catalyst etc. is provided in the exhaust passage 6 downstream of the turbine 8b.

An intake air pressure sensor 23 for measuring the intake air pressure (i.e. boost pressure) and an O₂ sensor 24 for measuring the oxygen concentration in the intake air are provided in the intake manifold 5. In this embodiment, the intake air pressure sensor 23 corresponds to the intake air pressure sensing means according to the present invention.

The intake and exhaust system of the internal combustion engine 1 is equipped with an EGR apparatus 11. The EGR apparatus 11 includes an EGR passage 12 and an EGR valve 13. One end of the EGR passage 12 is connected to the exhaust manifold 7, and the other end thereof is connected to the portion of the intake passage 4 downstream of the throttle valve 9. The EGR valve 13 is provided in the EGR passage 12 and regulates the quantity of EGR gas introduced from the exhaust manifold 7 into the intake passage 4 through the EGR passage 12.

An electronic control unit (ECU) 20 is annexed to the internal combustion engine 1 having the above-described configuration. The ECU 20 is electrically connected with the air flow meter 14, the intake air pressure sensor 23, the O₂ sensor 24, a crank position sensor 21, and an accelerator opening degree sensor 22. Signals output from them are input to the ECU 20. The crank position sensor 21 is a sensor that senses the crank angle of the internal combustion engine 1. The accelerator opening degree sensor 22 is a sensor that senses the opening degree of the accelerator of the vehicle on which the internal combustion engine 1 is mounted.

The ECU 20 is also electrically connected with the fuel injection valves 3, a throttle valve 9 and the EGR valve 13. They are controlled by the ECU 20.

### (Control of Combustion State)

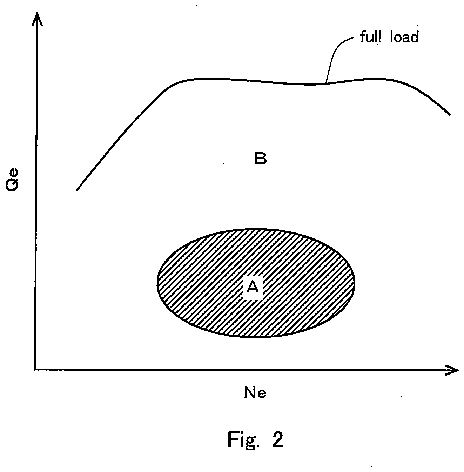

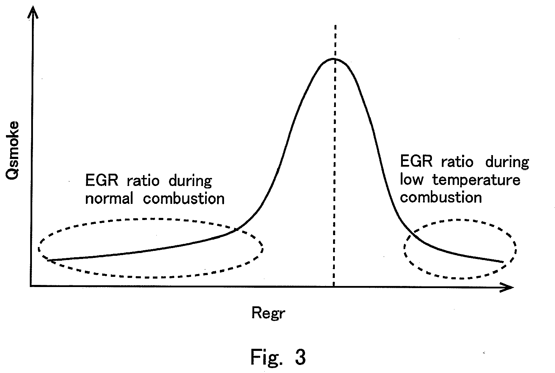

Control of the combustion state of the internal combustion engine according to this embodiment will be described with reference to Figs. 2 and 3. In the internal combustion engine 1 according to the embodiment, either normal combustion or low temperature combustion is selectively established as its combustion state in accordance with the operation range. Fig. 2 is a diagram showing an operation range in which normal combustion is performed and an operation range in which low temperature combustion is performed. In Fig. 2, the horizontal axis represents the engine rotational speed Ne of the internal combustion engine 1, and the vertical axis represents the engine load Qe of the internal combustion engine. In Fig. 2, the range A indicated by hatching is the low temperature combustion range in which low temperature combustion is performed, and the range B other than the range A is the normal combustion range in which normal combustion is performed.

Fig. 3 is a graph showing the relationship between the EGR ratio of the intake air and the quantity of smoke generation. In Fig. 3, the horizontal axis represents the EGR ratio Regr of the intake air, and the vertical axis represents the quantity of smoke generation Qsmoke. As shown in Fig. 3, during normal combustion, the EGR ratio of the intake air is controlled to a value lower than the ratio at which the quantity of smoke generation becomes largest, thereby controlling the quantity of smoke generation. On the other hand, during low temperature combustion, the EGR ratio of the intake air is controlled to a value higher than the ratio at which the quantity of smoke generation becomes largest, thereby controlling the quantity of smoke generation.

The EGR ratios for the respective combustion states are determined in accordance with the operation states of the internal combustion engine 1 during the respective combustion states in such a way that the quantity of smoke generation falls within an allowable range. Control of the EGR ratio of the intake air can be achieved by regulating the quantity of EGR gas introduced into the intake passage 4 by the EGR valve 13. In this embodiment, the EGR ratio can be calculated based on the oxygen concentration in the intake air measured by the O₂ sensor 24. The EGR ratio of the intake air can be controlled to a target EGR ratio by feedback-controlling the opening degree of the EGR valve 13 based on the EGR ratio thus calculated.

### (EGR Control during Transitional Operation)

Now, EGR control during transitional operation according to this embodiment will be described. During transitional operation in which the engine load of the internal combustion engine 1 is increasing or decreasing, there may sometimes be a turbo lag. If there is a turbo lag during accelerating operation in which the engine load is increasing, there is a time lag in the increase in the intake air quantity. In this case, if the EGR ratio of the intake air is controlled with a target EGR ratio for the engine load that is equal to that set during normal operation, the intake air quantity for the engine load will be smaller than that during normal operation. On the other hand, if there is a turbo lag during decelerating operation in which the engine load is decreasing, there is a time lag in the decrease in the intake air quantity. In this case, if the EGR ratio of the intake air is controlled with a target EGR ratio for the engine load that is equal to that set during normal operation, the intake air quantity for the engine load will be larger than that during normal operation.

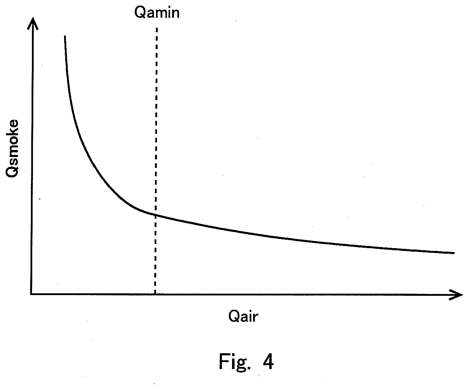

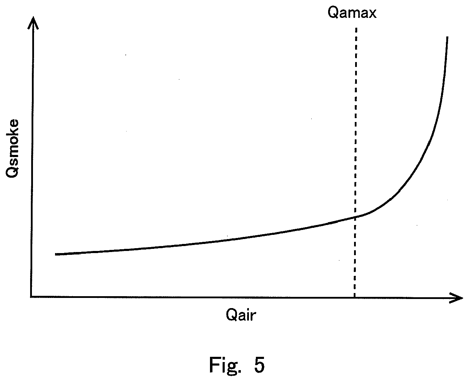

Here, the relationship between the intake air quantity and the quantity of smoke generation in the case where the combustion state of the internal combustion engine 1 is normal combustion and in the case where the combustion state of the internal combustion engine 1 is low temperature combustion will be described respectively with reference to Figs. 4 and 5. In Figs. 4 and 5, the horizontal axis represents the intake air quantity Qair, and the vertical axis represents the quantity of smoke generation Qsmoke.

Fig. 4 is a graph showing the relationship between the intake air quantity and the quantity of smoke generation in a case in which the engine load of the internal combustion engine 1 is a certain engine load during normal combustion. As shown in Fig. 4, during normal combustion, as the intake air quantity becomes smaller than a certain level, combustion of fuel becomes insufficient, resulting in an abrupt increase in the quantity of smoke generation. For this reason, if accelerating operation is performed during normal combustion and there is a time lag in the increase in the intake air quantity, there is a possibility that the quantity of smoke generation increases excessively due to insufficiency in the intake air quantity relative to the engine load.

In view of the above, a lower limit value Qamin is set for the intake air quantity of the internal combustion engine 1 during normal combustion. This lower limit value Qamin of the intake air quantity during normal combustion is the lowest value of the intake air quantities with which the quantity of smoke generation is kept within an allowable range. This value is set in accordance with the engine load of the internal combustion engine 1. If accelerating operation is performed during normal combustion and the intake air quantity becomes smaller than the lower limit value Qamin, the set target EGR ratio of the intake air is lowered. This decreases the quantity of EGR gas introduced into the intake passage 4, thereby increasing the intake air quantity to or above the lower limit value Qamin. In consequence, the quantity of smoke generation can be prevented from increasing excessively.

Fig. 5 is a graph showing the relationship between the intake air quantity and the quantity of smoke generation in a case in which the engine load of the internal combustion engine 1 is a certain engine load during low temperature combustion. As shown in Fig. 5, during low temperature combustion, in contrast to the case during normal combustion, as the intake air quantity becomes larger than a certain level, an abrupt increase in the quantity of smoke generation is caused by a rise in the combustion temperature. For this reason, if decelerating operation is performed during low temperature combustion and there is a time lag in the decrease in the intake air quantity, there is a possibility that the quantity of smoke generation increases excessively due to an excessively large intake air quantity relative to the engine load.

In view of the above, an upper limit value Qamax is set for the intake air quantity of the internal combustion engine 1 during low temperature combustion. This upper limit value Qamax of the intake air quantity during low temperature combustion is the highest value of the intake air quantities with which the quantity of smoke generation is kept within an allowable range. This value is set in accordance with the engine load of the internal combustion engine 1. If decelerating operation is performed during low temperature combustion and the intake air quantity becomes larger than the upper limit value Qamax, the set target EGR ratio of the intake air is raised. This increases the quantity of EGR gas introduced into the intake passage 4, thereby decreasing the intake air quantity to or below the upper limit value Qamax. In consequence, the quantity of smoke generation can be prevented from increasing excessively.

The lower limit value Qamin of the intake air quantity during normal combustion and the upper limit value Qamax of the intake air quantity during low temperature combustion are set on condition that the internal combustion engine 1 is in the respective combustion states. In simple comparison of numerical values, the lower limit value Qamin of the intake air quantity during normal combustion is larger than the upper limit value Qamax of the intake air quantity during low temperature combustion.

### (EGR Control Flow)

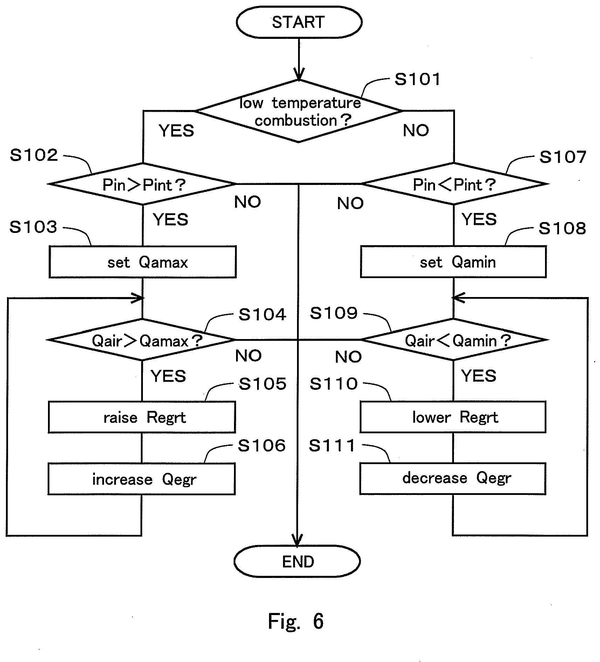

Now, a flow of the EGR control according to this embodiment will be described with reference to the flow chart in Fig. 6. This flow is stored in the ECU 20 in advance and executed by the ECU repeatedly at predetermined intervals.

In this flow, first in step S101, a determination is made as to whether or not the combustion state of the internal combustion engine 1 is low temperature combustion. In this step, whether the combustion state of the internal combustion engine 1 is low temperature combustion or not may be determined, for example, based on whether the operation range in which the operation state of the internal combustion engine 1 falls is range A shown in Fig. 2 or not. If the determination in step S101 is affirmative, the process of step S102 is executed subsequently. On the other hand, if the determination in step S101 is negative, it is determined that the combustion state of the internal combustion engine 1 is normal combustion, and the process of step S107 is executed subsequently.

In step S102, a determination is made as to whether or not the intake air pressure Pin measured by the intake air pressure sensor 23 is higher than a target intake air pressure Pint. The target intake air pressure Pint mentioned here is a predetermined value that is set in advance in accordance with the engine load etc. of the internal combustion engine 1. If the determination in step S102 is affirmative, it may be determined that the internal combustion engine 1 is in decelerating operation and there is a time lag in the decrease in the intake air pressure, namely in the decrease in the intake air quantity. In this case, the process of step S103 is executed subsequently. On the other hand, if the determination in step S102 is negative, the execution of this flow is once terminated.

In step S103, the upper limit value Qamax of the intake air quantity during low temperature combustion for the current engine load is set. The relationship between the upper limit value Qamax of the intake air quantity and the engine load is determined in advance based on, for example, an experiment, and the relationship is stored in the ECU 20 as a map or a relational expression. In this embodiment, the ECU 20 that executes the process of step S103 corresponds to the upper limit air quantity setting means according to the present invention.

Then in step S104, a determination is made as to whether or not the intake air quantity Qair measured by the air flow meter 14 is larger than the upper limit value Qamax of the intake air quantity set in step S103. If the determination in step S104 is affirmative, the process of step S105 is executed subsequently. If the determination in step S104 is negative, the execution of this flow is once terminated.

In step S105, the set value of the target EGR ratio Regrt is raised.

Then, in step S106, the degree of opening of the EGR valve 13 is made larger so that the EGR ratio of the intake air becomes equal to the target ratio Regrt increased in step S105. Thereby, the quantity of EGR gas Qegr introduced into the intake passage 4 is increased.

Then, the process of step S104 is executed again, and when the intake air quantity Qair becomes equal to or smaller than the upper limit value Qamax, the execution of this flow is once terminated.

On the other hand, in step S107, a determination is made as to whether or not the intake air pressure Pin measured by the intake air pressure sensor 23 is lower than a target intake air pressure Pint. The target intake air pressure Pint mentioned here is also a value that is predetermined in accordance with the engine load etc. of the internal combustion engine. If the determination in step S107 is affirmative, it may be determined that the internal combustion engine 1 is in accelerating operation and there is a time lag in the increase in the intake air pressure, namely in the increase in the intake air quantity. In this case, the process of step S108 is executed subsequently. On the other hand, if the determination in step S107 is negative, the execution of this flow is once terminated.

In step 108, the lower limit value Qamin of the intake air quantity during normal combustion for the current engine load is set. The relationship between the lower limit value Qamin of the intake air quantity and the engine load is determined in advance based on, for example, an experiment, and the relationship is stored in the ECU 20 as a map or a relational expression.

Then, in step S109, a determination is made as to whether or not the intake air quantity Qair measured by the air flow meter 14 is smaller than the lower limit value Qamin of the intake air quantity set in step S108. If the determination in step S109 is affirmative, the process of step S110 is executed subsequently. If the determination in step S109 is negative, the execution of this flow is once terminated.

In step S110, the set value of the target EGR ratio Regrt is lowered.

Then, in step S111, the degree of opening of the EGR valve 13 is made smaller so that the EGR ratio of the intake air becomes equal to the target EGR ratio Regrt decreased in step S110. Thereby, the quantity of EGR gas Qegr introduced into the intake passage 4 is decreased.

Then, the process of step S109 is executed again, and when the intake air quantity Qair becomes equal to or larger than the lower limit value Qamin, the execution of this flow is once terminated.

In this embodiment, during normal combustion, a lower limit value is set for the intake air quantity, and the EGR ratio of the intake air is controlled so that the intake air quantity becomes equal to or larger than the lower limit value. On the other hand, during low temperature combustion, an upper limit value is set for the intake air quantity, and the EGR ratio of the intake air is controlled so that the intake air quantity becomes equal to or smaller than the upper limit value. By this control, the quantity of smoke generation can be prevented from increasing excessively during normal combustion and low temperature combustion.

In the above-described flow, in cases where the intake air quantity Qair is larger than the upper limit value Qamax during low temperature combustion, the steps S104 through S106 are executed repeatedly, thereby controlling the intake air quantity Qair to a level equal to or lower than the upper limit value Qamax. Alternatively, in such cases, the EGR ratio of the intake air that makes the intake air quantity Qair equal to the upper limit value Qamax may be calculated, and the quantity of EGR gas Qegr introduced into the intake passage 4 may be regulated using the calculated EGR ratio as a target EGR ratio.

In the above-described flow, in cases where the intake air quantity Qair is smaller than the lower limit value Qamin during normal combustion, the steps S109 through Sill are executed repeatedly, thereby controlling the intake air quantity Qair to a level equal to or higher than the lower limit value Qamin. Alternatively, in such cases also, the EGR ratio of the intake air that makes the intake air quantity Qair equal to the lower limit value Qamin may be calculated, and the quantity of EGR gas Qegr introduced into the intake passage 4 may be regulated using the calculated EGR ratio as a target EGR ratio.

### (Modification)

If the difference between the engine load before acceleration and the engine load after acceleration is very large at the time when the operation state of the internal combustion engine 1 changes into accelerating operation, there may be cases in which the intake air quantity increases abruptly even if there is a turbo lag. In consequence, there may be cases in which the intake air quantity exceeds the upper limit value for keeping the quantity of smoke generation within an allowable range even at the time of accelerating operation during low temperature combustion. In view of this, in such cases also, the EGR ratio of the intake air may be regulated so as to make the intake air quantity equal to or smaller than the upper limit value, as with the above-described control during decelerating operation.

### <Embodiment 2>

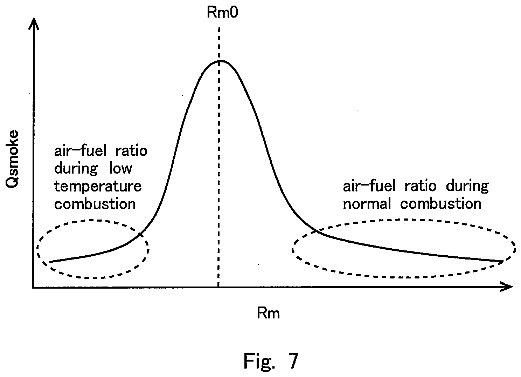

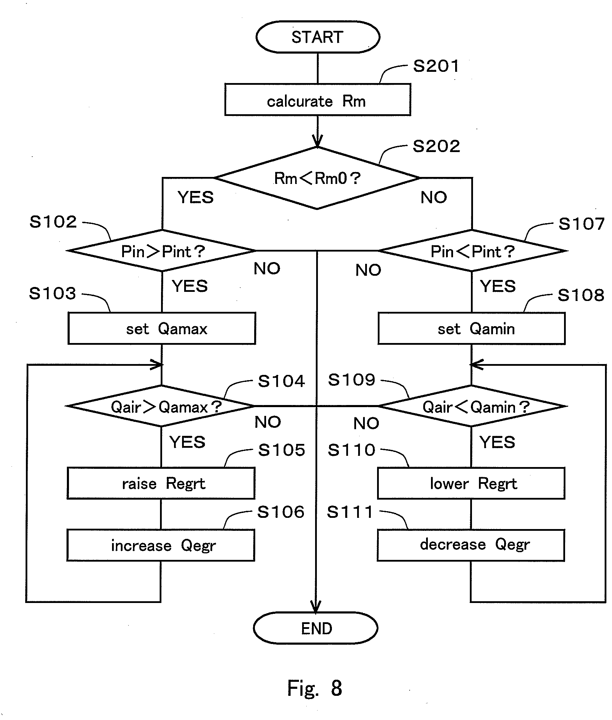

Embodiment 2 of the present invention will be described with reference to Figs. 7 and 8. Here, only the features different from those in embodiment 1 will be described.

### (Air-fuel Ratios of Air-fuel Mixture in Respective Combustion States)

Fig. 7 is a graph showing the relationship between the air fuel ratio of the air-fuel mixture and the quantity of smoke generation in the internal combustion engine 1. In Fig. 7, the horizontal axis represents the air-fuel ratio Rm of the air-fuel mixture, and the vertical axis represents the quantity of smoke generation Qsmoke. In this embodiment, during normal combustion, the EGR ratio of the intake air is controlled to a value lower than the ratio at which the quantity of smoke generation becomes largest, and the air-fuel ratio of the air-fuel mixture is controlled to a value higher than the ratio at which the quantity of smoke generation becomes largest. On the other hand, during low temperature combustion, the EGR ratio of the intake air is controlled to a value higher than the ratio at which the quantity of smoke generation becomes largest, and the air-fuel ratio of the air-fuel mixture is controlled to a value lower than the ratio at which the quantity of smoke generation becomes largest. In this connection, the control of the air-fuel ratio of the air-fuel mixture can be achieved by regulating the quantity of EGR gas introduced into the intake passage 4 by the EGR valve 13, as with the control of the EGR ratio of the intake air.

### (EGR Control Flow)

Now, a flow of the EGR control according to this embodiment will be described with reference to the flow chart in Fig. 8. This flow is stored in the ECU 20 in advance and executed by the ECU 20 repeatedly at predetermined intervals. In this flow, step S101 in the flow shown in Fig. 6 has been replaced by steps S201 and S202. Therefore, only step 201 will be described, and descriptions of the other steps will be omitted.

In this flow, in step S201, the air-fuel ratio Rm of the air-fuel mixture in the internal combustion engine 1 is calculated. The air-fuel ratio Rm of the air-fuel mixture in the internal combustion engine 1 can be calculated from the measurement value of the air flow meter 14, the EGR ratio of the intake air, and the fuel injection quantity in the internal combustion engine 1 etc. If an air-fuel ratio sensor that measures the air-fuel ratio of the exhaust gas is provided in the exhaust passage 6, the air-fuel ratio Rm of the air-fuel mixture may be estimated based on the measurement value of the air-fuel ratio sensor. In this embodiment, the ECU20 that executes the process of step S201 corresponds to the air-fuel ratio obtaining means according to the present invention.

Then, in step S202, a determination is made as to whether or not the air-fuel ratio Rm of the air-fuel mixture in the internal combustion engine 1 is lower than the air-fuel ratio Rm0 at which the quantity smoke generation becomes largest. If the determination in step S202 is affirmative, it is determined that the combustion state of the internal combustion engine 1 is low temperature combustion, and the process of step S102 is executed subsequently. On the other hand, if the determination in step S202 is negative, it is determined that the combustion state of the internal combustion engine 1 is normal combustion, and the process of step S107 is executed subsequently.

In this embodiment, since the air-fuel ratios of the air fuel mixture in the respective combustion states are controlled in the above manner, the combustion state of the internal combustion engine 1 can be determined based on the air-fuel ratio.

The threshold value of the air-fuel ratio used to determine the combustion state in step S202 of the above-described flow is not necessarily required to be the air-fuel ratio Rm at which the quantity of smoke generation becomes largest, but it may be any value that enables discrimination between normal combustion and low temperature combustion.

The embodiments described in the foregoing may be implemented in combination, where feasible.

### [DESCRIPTION OF THE REFERENCE SIGNS]

- 1:: internal combustion engine
- 4:: intake passage
- 5:: intake manifold
- 6:: exhaust passage
- 7:: exhaust manifold
- 8:: turbocharger
- 8a:: compressor
- 8b:: turbine
- 9:: throttle valve
- 11:: EGR apparatus
- 12:: EGR passage
- 13:: EGR valve
- 14:: air flow meter
- 20:: ECU
- 21:: crank position sensor
- 22:: accelerator opening degree sensor
- 23:: intake air pressure sensor
- 24:: O₂ sensor

## Claims

1. An EGR control system for an internal combustion engine (1) that comprises an EGR apparatus (11) for introducing exhaust gas of the internal combustion engine (1) into an intake system as EGR gas and selects, as its combustion state, either low temperature combustion that is achieved by making the EGR ratio of intake air higher than a ratio at which the quantity of smoke generation becomes largest or normal combustion in accordance with an operation range, **characterized by** further comprising:
upper limit air quantity setting means (20) for setting, in accordance with the engine load, an upper limit value of the intake air quantity of the internal combustion engine (1) for keeping the quantity of smoke generation within an allowable range when the combustion state of the internal combustion engine (1) is low temperature combustion, and
EGR ratio control means for controlling the EGR ratio of intake air by regulating the quantity of EGR gas introduced into the intake system by said EGR apparatus (11) so as to make the intake air quantity of the internal combustion engine (1) equal to or smaller than the upper limit value set by said upper limit air quantity setting means (20) when the combustion state of the internal combustion engine (1) is low temperature combustion and the operation state of the internal combustion engine (1) is transitional operation in which the engine load of the internal combustion engine (1) is increasing or decreasing.

2. An EGR control system for an internal combustion engine (1) according to claim 1 **characterized by** further comprising intake air pressure sensing means (23) for measuring the intake air pressure of the internal combustion engine (1), wherein
said target EGR ratio control means (20) makes the intake air quantity of the internal combustion engine (1) equal to or smaller than the upper limit value set when the combustion state of the internal combustion engine (1) is low temperature combustion and the intake air pressure measured by said intake air pressure sensing means (23) is higher than a target intake air pressure.

3. An EGR control system for an internal combustion engine (1) according to claim 1 or 2 **characterized by** further comprising air-fuel ratio obtaining means (20) for obtaining the air-fuel ratio of air-fuel mixture in the internal combustion engine (1), wherein
during low temperature combustion, the air-fuel ratio of the air-fuel mixture is controlled to be lower than a predetermined air-fuel ratio, and during normal combustion, the air-fuel ratio of the air-fuel mixture is controlled to be higher than said predetermined air-fuel ratio, and
when the air-fuel ratio of the air-fuel mixture obtained by said air-fuel mixture obtaining means (20) is lower than said predetermined air-fuel mixture, the upper limit value of the intake air quantity of the internal combustion engine (1) is set by said upper limit air quantity setting means (20).

## Patentansprüche

1. AGR-Steuerungssystem für eine Brennkraftmaschine (1), das eine AGR-Vorrichtung (11) zum Einleiten von Abgas der Brennkraftmaschine (1) in ein Einlasssystem als AGR-Gas aufweist und entweder eine Niedertemperaturverbrennung, die erreicht wird, in dem die AGR-Rate von Einlassluft höher als eine Rate gemacht wird, bei der die Menge von Raucherzeugung am größten wird, oder eine Normalverbrennung in Übereinstimmung mit einem Betriebsbereich als deren Verbrennungszustand auswählt, **dadurch gekennzeichnet, dass** das System des Weiteren Folgendes aufweist:
eine Einstellungseinrichtung (20) einer oberen Grenzluftmenge zum Einstellen, in Übereinstimmung mit der Maschinenlast, eines oberen Grenzwerts der Einlassluftmenge der Brennkraftmaschine (1), um die Menge von Raucherzeugung innerhalb eines erlaubten Bereichs zu halten, wenn der Verbrennungszustand der Brennkraftmaschine (1) eine Niedertemperaturverbrennung ist, und
eine AGR-Ratensteuerungseinrichtung zum Steuern der AGR-Rate von Einlassluft durch ein Regulieren der Menge von AGR-Gas, das in das Einlasssystem durch die AGR-Vorrichtung (11) eingeleitet wird, sodass die Einlassluftmenge der Brennkraftmaschine (1) gleich zu oder kleiner als der obere Grenzwert wird, der durch die Einstellungseinrichtung (20) einer oberen Grenzluftmenge festgelegt ist, wenn der Verbrennungszustand der Brennkraftmaschine (1) eine Niedertemperaturverbrennung ist und der Betriebszustand der Brennkraftmaschine (1) ein Übergangsbetrieb ist, bei dem die Maschinenlast der Brennkraftmaschine (1) zunimmt oder abnimmt.

2. AGR-Steuerungssystem für eine Brennkraftmaschine (1) gemäß Anspruch 1, **dadurch gekennzeichnet, dass** das System des Weiteren eine Einlassluftdruckerfassungseinrichtung (23) zum Messen des Einlassluftdrucks der Brennkraftmaschine (1) aufweist, wobei
die Soll-AGR-Ratensteuerungseinrichtung (20) die Einlassluftmenge der Brennkraftmaschine (1) gleich zu oder kleiner als den oberen Grenzwert macht, der eingestellt ist, wenn der Verbrennungszustand der Brennkraftmaschine (1) eine Niedertemperaturverbrennung ist und der Einlassluftdruck, der durch die Einlassluftdruckerfassungseinrichtung (23) gemessen wird, höher als ein Solleinlassluftdruck ist.

3. AGR-Steuerungssystem für eine Brennkraftmaschine (1) gemäß Anspruch 1 oder 2, **dadurch gekennzeichnet, dass** das System des Weiteren eine Luft-Kraftstoffverhältniserlangungseinrichtung (20) zum Erhalten des Luft-Kraftstoffverhältnis eines Luft-Kraftstoffgemischs in der Brennkraftmaschine (1) aufweist, wobei
während einer Niedertemperaturverbrennung das Luft-Kraftstoffverhältnis des Luft-Kraftstoffgemischs gesteuert wird, um niedriger als ein vorbestimmtes Luft-Kraftstoffverhältnis zu sein, und während einer Normalverbrennung das Luft-Kraftstoffverhältnis des Luft-Kraftstoffgemischs gesteuert wird, um höher als das vorbestimmte Luft-Kraftstoffverhältnis zu sein, und
wenn das Luft-Kraftstoffverhältnis des Luft-Kraftstoffgemischs, das durch die Luft-Kraftstoffmischungserlangungseinrichtung (20) erhalten wird, niedriger als das vorbestimmte Luft-Kraftstoffgemisch ist, der obere Grenzwert der Einlassluftmenge der Brennkraftmaschine (1) durch die Einstellungseinrichtung (20) einer oberen Grenzluftmenge festgelegt wird.

## Revendications

1. Système de commande de EGR pour un moteur à combustion interne (1) qui comprend un appareil de EGR (11) pour introduire le gaz d'échappement du moteur à combustion interne (1) dans un système d'admission tel qu'un gaz de EGR et sélectionne, au titre de son état de combustion, la combustion à basse température qui est obtenue en rendant le rapport de EGR de l'air d'admission supérieur à un rapport auquel la quantité de génération de fumée devient la plus importante ou une combustion normale selon une plage de fonctionnement, **caractérisé en ce qu'**il comprend en outre :
des moyens de réglage de quantité de limite supérieure (20) pour régler, selon la charge de moteur, une valeur de limite supérieure de la quantité d'air d'admission du moteur à combustion interne (1) pour maintenir la quantité de génération de fumée dans une plage admissible lorsque l'état de combustion du moteur à combustion interne (1) est la combustion à basse température, et
des moyens de contrôle de rapport de EGR pour contrôler le rapport de EGR de l'air d'admission en régulant la quantité de gaz de EGR introduite dans le système d'admission par ledit appareil de EGR (11) afin de rendre la quantité d'air d'admission du moteur à combustion interne (1) égale ou inférieure à la valeur de limite supérieure déterminée par lesdits moyens de réglage de quantité d'air de limite supérieure (20) lorsque l'état de combustion du moteur à combustion interne (1) est la combustion à basse température et l'état de fonctionnement du moteur à combustion interne (1) est le fonctionnement transitoire dans lequel la charge de moteur du moteur à combustion interne (1) augmente ou diminue.

2. Système de commande de EGR pour un moteur à combustion interne (1) selon la revendication 1, **caractérisé en ce qu'**il comprend en outre des moyens de détection de pression d'air d'admission (23) pour mesurer la pression d'air d'admission du moteur à combustion interne (1), dans lequel :
lesdits moyens de contrôle de rapport de EGR cible (20) rendent la quantité d'air d'admission du moteur à combustion interne (1) égale ou inférieure à la valeur de limite supérieure déterminée lorsque l'état de combustion du moteur à combustion interne (1) est la combustion à faible température et la pression d'air d'admission mesurée par lesdits moyens de détection de pression d'air d'admission (23) est supérieure à une pression d'air d'admission cible.

3. Système de commande de EGR pour un moteur à combustion interne (1) selon la revendication 1 ou 2, **caractérisé en ce qu'**il comprend en outre des moyens d'obtention de rapport d'air - carburant (20) pour obtenir le rapport d'air - carburant du mélange d'air - carburant dans le moteur à combustion interne (1), dans lequel :
pendant la combustion à basse température, le rapport d'air - carburant du mélange d'air - carburant est contrôlé pour être inférieur à un rapport d'air - carburant prédéterminé, et pendant la combustion normale, le rapport d'air - carburant du mélange d'air - carburant est contrôlé pour être supérieur audit rapport d'air - carburant prédéterminé, et
lorsque le rapport d'air - carburant du mélange d'air - carburant obtenu par lesdits moyens d'obtention de mélange d'air - carburant (20) est inférieur audit mélange d'air - carburant prédéterminé, la valeur de limite supérieure de la quantité d'air d'admission du moteur à combustion interne (1) est déterminée par lesdits moyens de réglage de quantité d'air de limite supérieure (20).
